# EUROPEAN PATENT APPLICATION

(11) **EP 4 239 734 A1**
(43) Date of publication of application: **06.09.2023**
(21) Application number: 21885745.6
(22) Date of filing: 16.09.2021
(51) Int. Cl.: H01M 8/00, H01M 8/04, H01M 8/043, H01M 8/04313, H01M 8/04694, F24H 15/395, F24H 1/00

(54) **FUEL CELL DEVICE**

(30) Priority: 28.10.2020 JP 2020180664
(71) Applicant: Kyocera Corporation, Kyoto-shi Kyoto 612-8501 (JP)
(72) Inventor: SUZUKI, Masato, Kyoto-shi, Kyoto 612-8501 (JP); OKADA, Michitada, Kyoto-shi, Kyoto 612-8501 (JP)
(74) Representative: TBK
(86) International application number: PCT/JP2021/034197
(87) International publication number: WO 2022/091626

(57) **Abstract**

A fuel cell device includes: a fuel cell; and a controller configured to provide a notification to a user and to control a first electronic device configured to make hot water that is heated with exhaust heat of the fuel cell be discharged in response to an operation of the user, in which the controller is configured to, when the fuel cell is in an inactive state, make the first electronic device display a notification that the fuel cell is inactive, and is configured to, when the fuel cell is not reactivated after display of the notification and the user operates the first electronic device, make the first electronic device provide a notification with at least one of a warning sound and warning display.

## Description

### CROSS-REFERENCE TO RELATED APPLICATIONS

The present application claims priority to Japanese Patent Application No. 2020-180664 filed on October 28, 2020, the disclosure of which is incorporated herein by reference in its entirety.

### TECHNICAL FIELD

The present disclosure relates to a fuel cell device.

### BACKGROUND OF INVENTION

A power generation system including a fuel cell is currently in widespread use. A fuel cell uses a fuel gas such as hydrogen and an oxidizer gas such as oxygen to generate power by an electrochemical reaction. A power generation system as described above outputs electric power supplied from a power company even when the fuel cell is not active. Therefore, the user has difficulty in becoming aware that the fuel cell is not active. For example, Patent Literature 1 discloses a power generation system that, in response to an event that a period during which the power generation system is not generating power becomes a predetermined period or more, provides information for a user to become aware of the event.

### CITATION LIST

### PATENT LITERATURE

Patent Literature 1: Japanese Unexamined Patent Application Publication No. 2014-049218

### SUMMARY

In an embodiment, a fuel cell device includes a fuel cell and a controller.

The controller is configured to provide a notification to a user and to control a first electronic device configured to make hot water that is heated with exhaust heat of the fuel cell be discharged in response to an operation of the user.

The controller is configured to, when the fuel cell is in an inactive state, make the first electronic device display a notification that the fuel cell is inactive, and is configured to, when the fuel cell is not reactivated after display of the notification and the user operates the first electronic device, make the first electronic device provide a notification with at least one of a warning sound and warning display.

### BRIEF DESCRIPTION OF THE DRAWINGS

FIG. 1 is a diagram illustrating a conceptual configuration of a fuel cell device and an example configuration of a power generation system including the fuel cell device according to an embodiment.
FIG. 2 is a diagram illustrating an example configuration of a first electronic device.
FIG. 3 is a diagram for explaining a notification to a user of the first electronic device.
FIG. 4 is a diagram illustrating an example configuration of a second electronic device.
FIG. 5 is a diagram for explaining a notification to a user of the second electronic device.
FIG. 6 is a flowchart for explaining processes performed by a controller of the fuel cell device according to the embodiment.

### DESCRIPTION OF EMBODIMENTS

Hereinafter, an embodiment of the present disclosure will be described with reference to the drawings. The drawings referred to in the following description are schematic drawings. For example, a ratio of sizes in the drawings might not correspond to the actual ratio.

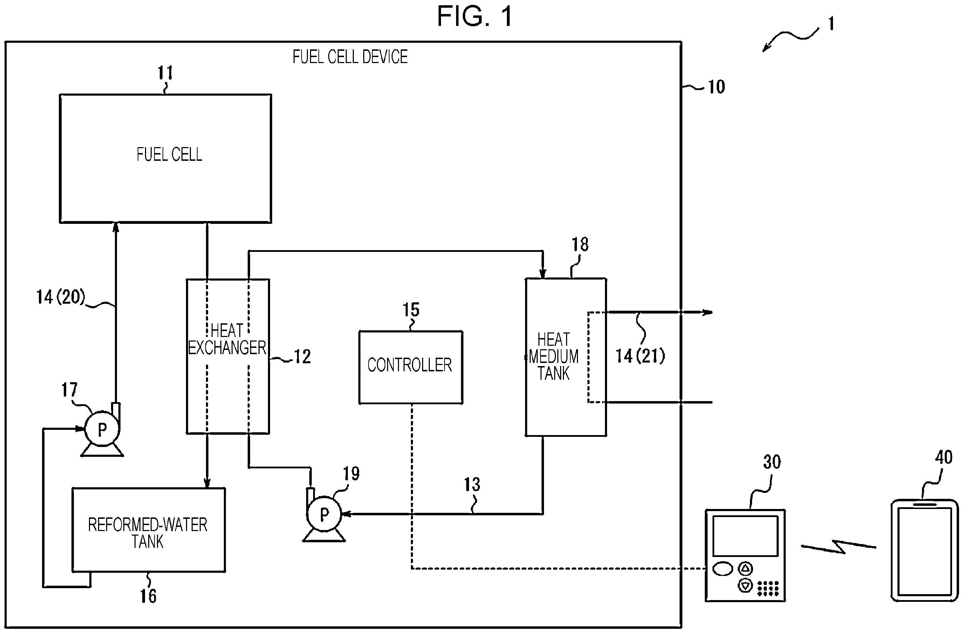

FIG. 1 is a diagram illustrating a conceptual configuration of a fuel cell device 10 and an example configuration of a power generation system 1 including the fuel cell device 10 according to an embodiment of the present disclosure.

The fuel cell device 10 can be interconnected to or disconnected from a system. The fuel cell device 10 can supply electric power to a load (for example, a common device) via a power conditioner while being interconnected to the system. The power conditioner converts electric power generated by the fuel cell device 10 to electric power having properties suitable for output to the system. The fuel cell device 10 can supply electric power to auxiliaries and the like included in the fuel cell device 10 while being disconnected from the system.

The power generation system 1 includes the fuel cell device 10, a first electronic device 30, and a second electronic device 40.

The first electronic device 30 provides a notification to a user of the power generation system 1 (hereinafter simply referred to as "user") and makes hot water that is heated with exhaust heat of a fuel cell 11 be discharged in response to a user operation. The first electronic device 30 need not be of a specific type as long as the first electronic device 30 includes the function as described above, and is a water-heater remote controller in this embodiment. The water-heater remote controller is installed inside a house or the like and makes hot water be discharged into a bathtub or the like in response to a user operation. In another example, the first electronic device 30 may be a computer that manages the discharge, temperature, and the like of hot water in a factory or the like. Here, the user may be the administrator of the power generation system 1. The configuration of the first electronic device 30 will be described in detail below.

The second electronic device 40 can communicate with the first electronic device 30. The second electronic device 40 need not be of a specific type as long as the second electronic device 40 includes the function as described above, and is a mobile communication terminal in this embodiment. The mobile communication terminal is a mobile terminal carried by the user and is, for example, a smartphone, a smartwatch, a tablet terminal, a game machine, or an e-book reader. In another example, the second electronic device 40 may be a car navigation system that can communicate with the first electronic device 30. The configuration of the second electronic device 40 will be described in detail below.

As illustrated in FIG. 1, the fuel cell device 10 according to this embodiment includes the fuel cell 11, a heat exchanger 12, a circulation passage 13, a liquid flow passage 14, and a controller 15. Although the fuel cell device 10 in the example illustrated in FIG. 1 further includes a reformed-water tank 16, a reformed-water pump 17, a heat medium tank 18, and a heat medium pump 19, the fuel cell device 10 need not include some or all of these component elements or may have a different configuration. That is, the fuel cell device 10 need not include all of the component elements illustrated in FIG. 1. The fuel cell device 10 may include a component element other than those illustrated in FIG. 1. For example, the fuel cell device 10 may make hot water that is stored in the heat medium tank 18 be directly discharged through a hot-water supply passage 21 described below.

The fuel cell 11 generates power by using supplied gas, air, and reformed water. With power generation, the fuel cell 11 releases high-temperature exhaust gas. The fuel cell 11 includes an exhaust passage. The fuel cell 11 sends the exhaust gas to the heat exchanger 12 through the exhaust passage.

The heat exchanger 12 makes exhaust heat released from the fuel cell 11 as the exhaust gas undergo heat exchange with a heat medium. The heat medium is a fluid, such as water or antifreeze, of high specific heat. Reformed water from the exhaust gas condensed in heat exchange with the heat medium in the heat exchanger 12 is stored in the reformed-water tank 16. The reformed-water tank 16 may temporarily store the reformed water. The reformed-water tank 16 may be covered by a heat insulator. The reformed water stored in the reformed-water tank 16 is pressed by the reformed-water pump 17 to an increased pressure and supplied to the fuel cell 11. Exhaust gas not condensed in the heat exchanger 12 is released from the fuel cell device 10.

The circulation passage 13 allows the heat medium to circulate therethrough and pass through the heat exchanger 12. The circulation passage 13 may allow the heat medium to circulate between the heat exchanger 12 and the heat medium tank 18. The heat medium tank 18 may store the heat medium. The heat medium tank 18 may be covered by a heat insulator.

The circulation passage 13 may be provided with the heat medium pump 19. The heat medium pump 19 presses the heat medium to an increased pressure to thereby make the heat medium circulate through the circulation passage 13. The heat medium pump 19 may operate in response to control by the controller 15.

The liquid flow passage 14 is a flow passage other than the circulation passage 13 and is related to operations of the fuel cell 11. The liquid flow passage 14 includes a supply passage 20 for supplying the reformed water to the fuel cell 11 and the hot-water supply passage 21 for discharging hot water by using heat obtained from the heat medium. The supply passage 20 connects the reformed-water tank 16 and the fuel cell 11 with the reformed-water pump 17 therebetween. The hot-water supply passage 21 passes through, for example, the inside of the heat medium tank 18. Water supplied to the hot-water supply passage 21 undergoes heat exchange with the heat medium in the heat medium tank 18 and is heated.

The controller 15 includes one or more processors and a memory. The processors may include a general-purpose processor that reads a specific program and executes a specific function and a dedicated processor that is specialized in specific processing. The dedicated processor may include an ASIC (application-specific integrated circuit (IC)). The processors may include a PLD (programmable logic device). A PLD may include an FPGA (field-programmable gate array). The controller 15 may be any of an SoC (System-on-a-Chip) and an SiP (System In a Package) that include one or more processors cooperating with each other.

The controller 15 controls the component elements of the fuel cell device 10 including the fuel cell 11. For example, the controller 15 activates or deactivates the fuel cell 11. The controller 15 can communicate with the first electronic device 30 and control the first electronic device 30. For example, the controller 15 obtains necessary data from the first electronic device 30 and outputs to the first electronic device 30 a control signal for performing a necessary operation.

In this embodiment, when the fuel cell 11 is inactive, the controller 15 makes the first electronic device 30 display a notification that the fuel cell 11 is inactive, and when the fuel cell 11 is not reactivated after display of the notification and the user operates the first electronic device 30, the controller 15 makes the first electronic device 30 provide a notification with at least one of a warning sound and warning display. The first electronic device 30 is, for example, a water-heater remote controller installed indoors. When the fuel cell 11 is inactive and the first electronic device 30 is made to display the notification that the fuel cell 11 is inactive but the fuel cell 11 is not reactivated, the possibility that the user does not become aware of the notification displayed on the first electronic device 30 is high. On the other hand, when the user operates the first electronic device 30, the possibility that the user is in the vicinity of the first electronic device 30 or at least stays indoors is high. At such a timing, the controller 15 communicates to the user, information indicating that the fuel cell 11 is inactive by using the first electronic device 30. With the warning sound or the like, the user can easily become aware that the fuel cell 11 remains inactive unintentionally even when the user does not become aware of the notification that the fuel cell 11 is inactive, displayed on the first electronic device 30.

In response to the elapse of a predetermined period (of for example, one week) since the start of the inactive state of the fuel cell 11, the controller 15 may make the first electronic device 30 transmit information to the second electronic device 40. The second electronic device 40 is, for example, a mobile communication terminal such as a smartphone. Therefore, the user can become aware that the fuel cell 11 remains inactive unintentionally even when, for example, the user is out, with a notification from the second electronic device 40 based on the transmitted information. The controller 15 may make the first electronic device 30 repeatedly transmit information to the second electronic device 40 until the number of times information is transmitted reaches a predetermined number of times. The user can become aware that the fuel cell 11 remains inactive unintentionally even when the user is, for example, on a trip and stays out for a long period.

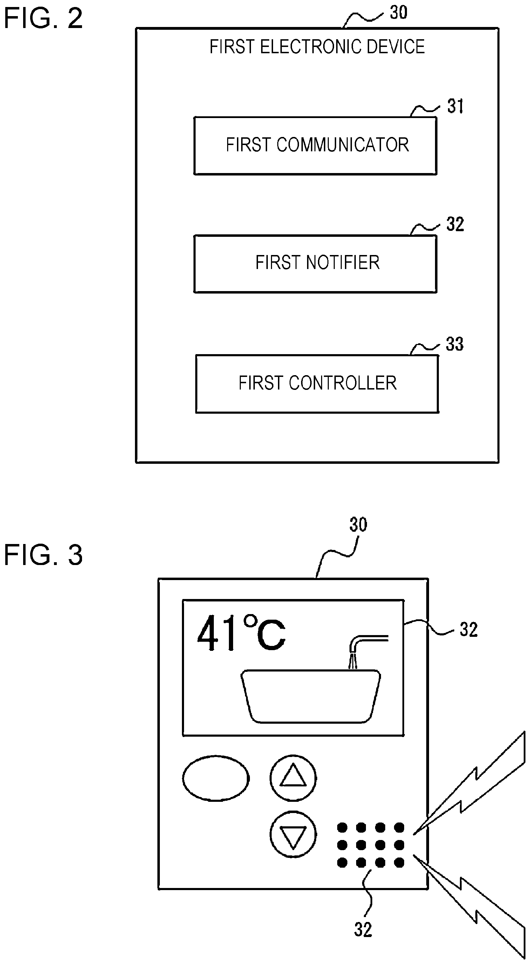

FIG. 2 is a diagram illustrating an example configuration of the first electronic device 30. FIG. 3 is a diagram for explaining a notification to the user of the first electronic device 30. As illustrated in FIG. 2, the first electronic device 30 may include a first communicator 31, a first notifier 32, and a first controller 33.

The first communicator 31 is an interface for communicating with the fuel cell device 10 and the second electronic device 40 at least wirelessly or by wire. The first communicator 31 can include communication interfaces conforming to mobile communication standards such as 4G (4th Generation) and 5G (5th Generation), a wired LAN (local area network) standard, and a wireless LAN standard. The first communicator 31 may, for example, communicate with the fuel cell device 10 by wire and with the second electronic device 40 wirelessly.

The first notifier 32 provides information to the user. The first notifier 32 may include a display that displays an image. The display may be a liquid crystal display, an organic EL (electro-luminescence) panel, or the like. In this embodiment, the display is a touch panel display (touch screen display) including an input function. In this embodiment, the first notifier 32 also includes a speaker that emits a sound. As illustrated in FIG. 3, for example, when the fuel cell 11 is inactive and the user operates the first electronic device 30, the first notifier 32 may emit a warning sound. The first notifier 32 may display a notification that the fuel cell 11 is inactive (for example, warning display). In this case, the notification needs to be displayed in a more visually appealing form than a notification about the inactive state displayed for the first time after the fuel cell 11 has become inactive. The notification with the warning sound and that with the warning display may be simultaneously provided.

The first controller 33 controls operations of the first communicator 31 and the first notifier 32 on the basis of a control signal from the controller 15. The first controller 33 may manage information (hereinafter referred to as "registration information") about the second electronic device 40 registered by the user as an information transmission destination. The first controller 33 may store the registration information in an accessible storage device (for example, a memory or an HDD) and output management information to the controller 15 of the fuel cell device 10. The first controller 33 may control the discharge of hot water and may output information to the controller 15 on the basis of user operations. For example, when a user operation is an operation of pressing a button for filling a bathtub with hot water, the first controller 33 may make hot water be discharged and may output to the controller 15 information indicating that the user has operated the first electronic device 30. For example, when a user operation is an operation performed on a set screen of the touch panel display for reactivating the fuel cell 11, the first controller 33 may output to the controller 15 information indicating that the user has performed the operation for reactivating the fuel cell 11.

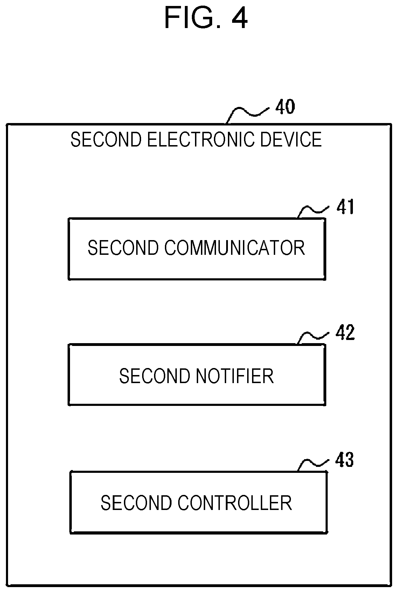

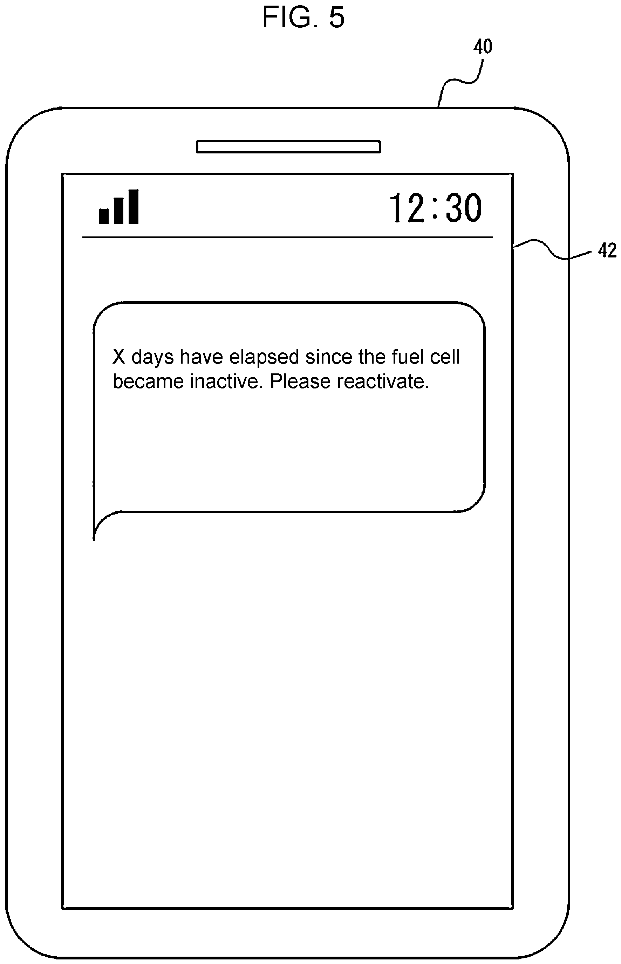

FIG. 4 is a diagram illustrating an example configuration of the second electronic device 40. FIG. 5 is a diagram for explaining a notification to the user of the second electronic device 40. As illustrated in FIG. 4, the second electronic device 40 may include a second communicator 41, a second notifier 42, and a second controller 43.

The second communicator 41 is an interface for communicating with the first electronic device 30 at least wirelessly or by wire. The second communicator 41 can include communication interfaces conforming to mobile communication standards such as 4G and 5G, a wired LAN standard, and a wireless LAN standard. In this embodiment, the second communicator 41 wirelessly communicates with the first electronic device 30.

The second notifier 42 provides information to the user. The second notifier 42 may include a display that displays an image. The display may be a liquid crystal display, an organic EL display, or the like. The display may be a touch panel display including an input function. The second notifier 42 may include a speaker that emits a sound. As illustrated in FIG. 5, for example, in response to the elapse of the predetermined period since the start of the inactive state of the fuel cell 11, the second notifier 42 may display a message for encouraging the user to reactivate the fuel cell 11. The second notifier 42 may emit a warning sound.

The second controller 43 controls operations of the second communicator 41 and the second notifier 42 on the basis of information about the inactive state of the fuel cell 11 transmitted from the first electronic device 30. The second controller 43 controls the second electronic device 40 as a whole in order to implement functions of a mobile communication terminal including data communication and voice calls.

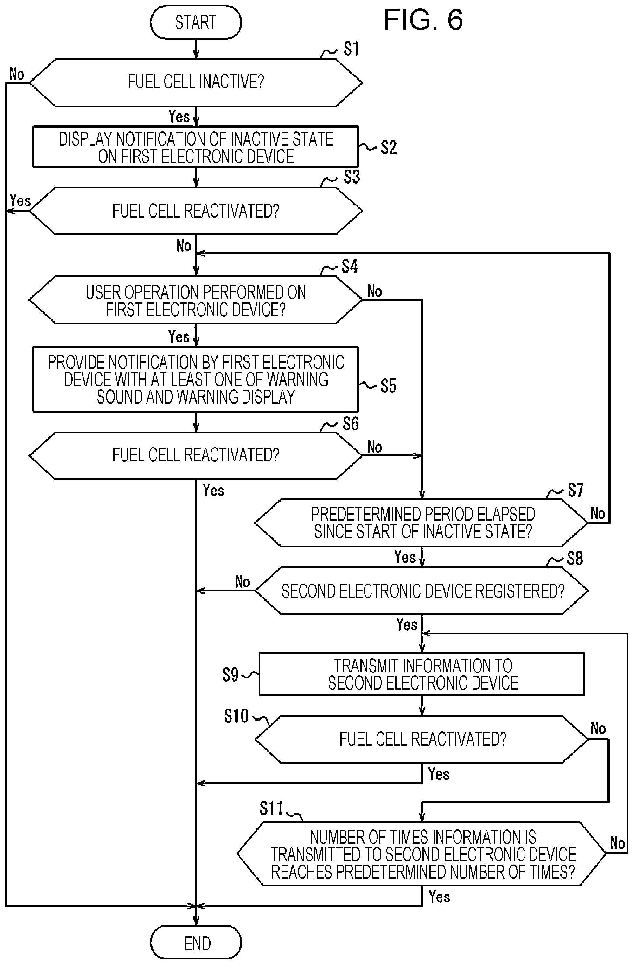

FIG. 6 is a flowchart for explaining processes performed by the controller 15 of the fuel cell device 10.

The controller 15 determines the state of the fuel cell 11, and if the fuel cell 11 is inactive (Yes in step S1), makes the first electronic device 30 display a notification that the fuel cell 11 is inactive (step S2). The controller 15 may keep the first electronic device 30 displaying the notification of the inactive state during a period from the start of the inactive state of the fuel cell 11 to reactivation of the fuel cell 11 regardless of whether the user is at home or out. If the fuel cell 11 is active (No in step S1), the controller 15 does not perform a process for providing a notification to the user.

Subsequently, the controller 15 checks whether the fuel cell 11 is reactivated (step S3). If the fuel cell 11 is reactivated (Yes in step S3), the controller 15 ends the series of processes. If the fuel cell 11 is not reactivated (No in step S3), the controller 15 proceeds to the process in step S4. Determination in step S3 can be performed, for example, within one day after the fuel cell 11 has become inactive.

Subsequently, if a user operation is performed on the first electronic device 30 (Yes in step S4), the controller 15 makes the first electronic device 30 provide a notification with at least one of a warning sound and warning display (step S5). When becoming aware that the fuel cell 11 is inactive with, for example, the warning sound, the user may reactivate the fuel cell 11 on the set screen of the first electronic device 30. If the fuel cell 11 is reactivated (Yes in step S6), the controller 15 ends the series of processes.

If a user operation is not performed on the first electronic device 30 (No in step S4) or the fuel cell 11 is not reactivated (No in step S6), the controller 15 proceeds to the process in step S7.

If a predetermined period is not elapsed since the start of the inactive state of the fuel cell 11 (No in step S7), the controller 15 returns to the process in step S4. The predetermined period is, for example, one week but is not limited to this.

If the predetermined period is elapsed since the start of the inactive state of the fuel cell 11 (Yes in step S7), the controller 15 determines whether the second electronic device 40 is registered (step S8). If the second electronic device 40 is not registered (No in step S8), the controller 15 ends the series of processes.

If the second electronic device 40 is registered (Yes in step S8), the controller 15 makes the first electronic device 30 transmit information to the second electronic device 40 (step S9). The second electronic device 40 displays, for example, a message for encouraging the user to reactivate the fuel cell 11 (see FIG. 5), on the basis of the information transmitted from the first electronic device 30. When becoming aware that the fuel cell 11 is inactive with, for example, the message displayed by the second electronic device 40, the user may reactivate the fuel cell 11 on the set screen of the first electronic device 30 when the user is at home. When the user can perform a remote operation, the user may operate the first electronic device 30 by using the second electronic device 40 to thereby reactivate the fuel cell 11.

If the fuel cell 11 is reactivated (Yes in step S10), the controller 15 ends the series of processes. If the fuel cell 11 is not reactivated (No in step S10), the controller 15 determines whether the number of times information is transmitted to the second electronic device 40 reaches a predetermined number of times (step S11). The predetermined number of times is, for example, three times but is not limited to this.

If the number of times information is transmitted to the second electronic device 40 reaches the predetermined number of times (Yes in step S11), the controller 15 ends the series of processes. If the number of times information is transmitted to the second electronic device 40 does not reach the predetermined number of times (No in step S11), the controller 15 returns to the process in step S9. That is, the controller 15 makes the first electronic device 30 transmit information again to the second electronic device 40.

As described above, the fuel cell device 10 according to this embodiment can avoid the inactive state of the fuel cell 11 not intended by the user with the above-described configuration. When the fuel cell 11 is inactive, the user is unable to satisfactorily enjoy advantages and returns, including CO₂ (carbon dioxide) reduction, reduction of primary energy, and reduction of electricity expenses, from the power generation system 1. The fuel cell device 10 according to this embodiment can allow the user to avoid such a disadvantage.

The fuel cell device 10 according to this embodiment can notify the user of the inactive state of the fuel cell 11 even when the user does not become aware of a notification provided by the first electronic device 30 or when the user is not in the vicinity of the first electronic device 30, by making the first electronic device 30 transmit information to the second electronic device 40. Therefore, the fuel cell device 10 can encourage the user to reactivate the fuel cell 11 to thereby increase the effect of avoiding the inactive state of the fuel cell 11.

Although an embodiment of the present disclosure has been described with reference to the drawings and examples, it is to be noted that a person skilled in the art can easily conceive various variations or alterations on the basis of the present disclosure. Therefore, it is to be noted that these variations or alterations are within the scope of the present disclosure. For example, functions and the like included in the component units, steps, or the like can be rearranged so as not to cause any logical contradiction, and multiple component units, steps, or the like may be integrated into one component unit or step or may be divided. Although a device according to the embodiment of the present disclosure has been focused and described, the embodiment according to the present disclosure can also be implemented as a method that includes steps performed by the component units of the device. The embodiment of the present disclosure can also be implemented as a method or a program to be executed by a processor of the device or as a storage medium on which the program is recorded. It is to be understood that these are within the scope of the present disclosure.

For example, the controller 15 may make the first electronic device 30 transmit information to the second electronic device 40 not only in response to the elapse of the predetermined period since the start of the inactive state of the fuel cell 11 but also on the basis of a return from reactivation of the fuel cell 11. That is, the controller 15 may calculate a return from reactivation of the fuel cell 11, and when the predetermined period has been elapsed and the controller 15 determines that a return is brought, may make the first electronic device 30 transmit information to the second electronic device 40. The return may be calculated on the basis of, for example, the price of electricity presented by the power company, the time when hot water is discharged, and the like. When the calculated return exceeds a threshold, the controller 15 may determine that a return is brought. The threshold may be, for example, a fixed value such as 1000 yen or a value that changes depending on the season or the like. For example, the controller 15 can include the calculated return in a message provided by the second electronic device 40 to thereby further encourage the user to reactivate the fuel cell 11.

For example, when the user operates the first electronic device 30 and the controller 15 is to make the first electronic device 30 provide a notification with at least one of a warning sound and warning display, the controller 15 may make the first electronic device 30 transmit information to the second electronic device 40 on the basis of a return from reactivation of the fuel cell 11.

For example, when information transmission to the second electronic device 40 is repeated, the controller 15 may change intervals at which information is transmitted. For example, the controller 15 may make the time interval between the second information transmission and the third information transmission shorter than the time interval between the first information transmission and the second information transmission. The controller 15 may change intervals at which information is transmitted to the second electronic device 40 on the basis of, for example, the season. For example, hot water is discharged more frequently in winter than in summer, and therefore, the fuel cell 11 being inactive is more disadvantages to the user. Therefore, for repeated information transmission to the second electronic device 40 in winter, the controller 15 may make retransmission be performed at shorter time intervals than in summer.

### REFERENCE SIGNS

- 1: power generation system
- 10: fuel cell device
- 11: fuel cell
- 12: heat exchanger
- 13: circulation passage
- 14: flow passage
- 15: controller
- 16: reformed-water tank
- 17: reformed-water pump
- 18: heat medium tank
- 19: heat medium pump
- 20: supply passage
- 21: hot-water supply passage
- 30: first electronic device
- 31: first communicator
- 32: first notifier
- 33: first controller
- 40: second electronic device
- 41: second communicator
- 42: second notifier
- 43: second controller

## Claims

1. A fuel cell device comprising:
a fuel cell; and
a controller configured to provide a notification to a user and to control a first electronic device configured to make hot water that is heated with exhaust heat of the fuel cell be discharged in response to an operation of the user, wherein
the controller is configured to, when the fuel cell is in an inactive state, make the first electronic device display a notification that the fuel cell is inactive, and is configured to, when the fuel cell is not reactivated after display of the notification and the user operates the first electronic device, make the first electronic device provide a notification with at least one of a warning sound and warning display.

2. The fuel cell device according to claim 1, wherein
the controller is configured to, in response to an elapse of a predetermined period since a start of the inactive state of the fuel cell, make the first electronic device transmit information to a second electronic device configured to be able to communicate with the first electronic device.

3. The fuel cell device according to claim 2, wherein
the controller is configured to make the first electronic device repeatedly transmit information to the second electronic device until a number of times information is transmitted reaches a predetermined number of times.

4. The fuel cell device according to claim 2 or 3, wherein
the controller is configured to calculate a return from reactivation of the fuel cell, and is configured to, when the predetermined period has elapsed and the controller determines that a return is brought, make the first electronic device transmit information to the second electronic device.

5. The fuel cell device according to any one of claims 2 to 4, wherein
the second electronic device is a mobile communication terminal to be carried by the user.

6. The fuel cell device according to claim 1, wherein
the controller is configured to, when the controller calculates a return from reactivation of the fuel cell and determines that a return is brought and the user operates the first electronic device, make the first electronic device provide a notification with at least one of a warning sound and warning display.

7. The fuel cell device according to any one of claims 1 to 6, wherein
the first electronic device is a water-heater remote controller installed indoors.
